# EUROPÄISCHE PATENTSCHRIFT

(11) **EP 4 357 651 B1**
(45) Veröffentlichungstag und Bekanntmachung des Hinweises auf die Patenterteilung: **27.05.2026**
(21) Anmeldenummer: 23197636.6
(22) Anmeldetag: 15.09.2023
(51) Int. Cl.: F16K 15/02, F16K 27/02, E05F 3/12

(54) **ÜBERDRUCKVENTIL FÜR EINEN TÜRANTRIEB**
OVERPRESSURE VALVE FOR A DOOR DRIVE
SOUPAPE DE SURPRESSION POUR UN ENTRAÎNEMENT DE PORTE

(30) Priorität: 17.10.2022 DE 102022210953
(43) Veröffentlichungstag der Anmeldung: 24.04.2024
(73) Patentinhaber: GEZE GmbH, 71229 Leonberg (DE)
(72) Erfinder: Engels, Jaspar, 34431 Marsberg (DE)
(74) Vertreter: Witte, Weller & Partner Patentanwälte mbB

(56) Entgegenhaltungen:
- EP-A1- 0 601 597
- EP-A2- 1 293 633
- DE-A1- 102009 057 327
- DE-A1- 4 326 968
- DE-U1- 9 007 022
- DE-U1- 9 010 459
- US-B1- 6 244 295

## Beschreibung

Die Erfindung betrifft ein Überdruckventil für einen Türantrieb, insbesondere für einen Türschließer, einen Türantrieb, insbesondere einem Türschließer mit einem solchen Überdruckventil sowie ein Verfahren zur Herstellung eines solchen Überdruckventils, gemäß dem Oberbegriff des Anspruchs 1.

Herkömmliche Überdruckventile für Türantriebe und insbesondere für Türschließer umfassen, insbesondere bestehen aus, vier Hauptkomponenten: einem Gehäuse, einem Dichtelement, einem Federelement und einem Lagerungselement. Das Gehäuse enthält einen darin gebildeten Strömungskanal. Das Dichtelement ist in dem Gehäuse zwischen einer Schließstellung, in welcher es den Strömungskanal verschließt, und einer Offenstellung, in welcher es den Strömungskanal freigibt, beweglich. Das Lagerungselement ist, insbesondere ebenso wie das Dichtelement und das Federelement, in einer axialen Richtung in einen Aufnahmebereich des Gehäuses eingesetzt und in dem Gehäuse fixiert. Das Federelement ist innerhalb des Gehäuses zwischen dem Lagerungselement und dem Dichtelement derart eingespannt, dass es das Dichtelement von dessen Offenstellung in dessen Schließstellung vorspannt.

Die so erhaltene Vorspannkraft für das Dichtelement definiert den Ansprechdruck des Überdruckventils und hängt wesentlich von der konkreten Position ab, in welcher das Lagerungselement innerhalb des Gehäuses fixiert wird.

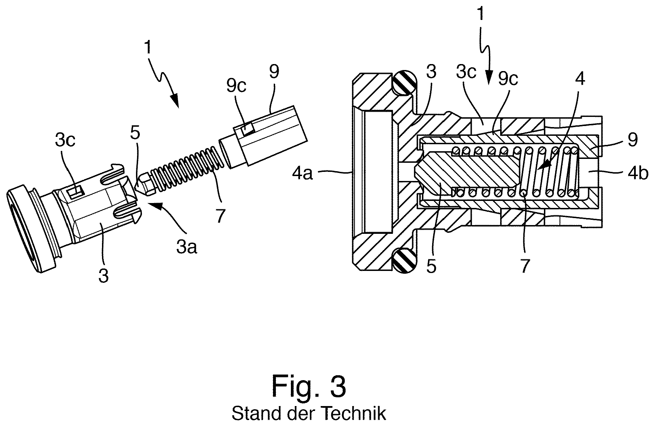

Gemäß einem herkömmlichen Ansatz erfolgt die Fixierung des Lagerungselements innerhalb des Gehäuses über einen Halteklip. Ein Beispiel für eine solche ist in FIG. 3 gezeigt.

Das in FIG. 3 gezeigte Überdruckventil 1 nach dem Stand der Technik ist aus einem Gehäuse 3, einem Dichtelement 5, einem Federelement 7 und einem Lagerungselement 9 gebildet. Im Gegensatz zu der nachfolgend beschriebenen erfindungsgemäßen Ausgestaltung weist hier das Gehäuse 3 mehrere Ausnehmungen 3c auf. Das Lagerungselement 9 weist Klipkonturen bzw. -ausformungen 9c auf. Zum Zusammensetzten dieses Überdruckventils 1 wird das Lagerungselement 9 nach dem Dichtelement 5 und nach dem Federelement 7 axial in einen Aufnahmebereich 3a des Gehäuses 3 eingeschoben, bis die Klipkonturen bzw. -ausformungen 9c des Lagerungselements 9 in die Ausnehmungen 3c des Gehäuses 3 eingreifen. Eine Relativposition zwischen dem Lagerungselement 9 und dem Gehäuse 3 hängt von der konkreten Positionierung der Ausnehmungen 3c im Gehäuse 3 bzw. der Klipkonturen bzw. -ausformungen 9c an dem Lagerungselement 9 ab. Folglich ist eine Kraft, mit welcher das Dichtelement 5 durch das Federelement 7 in seine Schließstellung vorgespannt wird, bereits vor dem Zusammensetzen der einzelnen Komponenten 3, 5, 7 und 9 festgelegt. Dies gilt somit auch für den Ansprechdruck des schließlich erhaltenen Überdruckventils 1. Ein Ausgleich eventueller Fertigungstoleranzen ist nicht mehr möglich.

Es hat sich jedoch gezeigt, dass bei einer derartigen Ausgestaltung bereits kleinere Toleranzschwankungen bei der Herstellung der einzelnen Komponenten 3, 5, 7 und 9 des Überdruckventils 1 zu relativ großen Schwankungen bei dem erhaltenen Ansprechdruck führen können.

DE 10 2009 057 327 A1 offenbart ein Rückschlagventil mit einem Gehäuse, in dem ein Einsatz mit einem beweglichen Stellelement vorhanden ist, das zum federkraftabhängigen Verschließen eines Durchgangs durch das Gehäuse am Einsatz vorbei ausgelegt ist, wobei das Gehäuse im Bereich eines dem Stellelement gegenüberliegenden ersten Endes eine Umbiegung aufweist, die einen Anschlag für den Einsatz bildet. Die Umbiegung ist als Rollierung ausgestaltet, wobei das erste Ende des Gehäuses weniger als das fünffache der Wandstärke von der Umbiegung entfernt ist.

DE 90 07 022 U1 offenbart ein Ventil, insbesondere zur Umgehung eines Schmierölfilters einer Brennkraftmaschine, mit einer Ventilplatte, einem Ventilsitz, der mit der Ventilplatte zusammenwirkt, einer Ventilfeder und einer Ventilhaube, wobei die Ventilfeder sich an der Ventilhaube abstützt und auf die Ventilplatte eine Kraft ausübt zum Abdichten der Öffnung zwischen Ventilplatte und Ventilsitz, wobei der Ventilkörper an der dem Ventilsitz zugewandten Stirnseite einen Bördelrand aufweist, an dem die Ventilhaube angebördelt ist. Der Ventilsitz ist an der kegeligen Fläche einer zentrischen Bohrung eines Ventilkörpers angeordnet, wobei die Ventilplatte ebenfalls eine kegelige Fläche aufweist, die an der kegeligen Fläche der Bohrung anliegt, und wobei der Ventilkörper ein zylindrischer Körper ist und an seinem äußeren Umfang ein Schraubgewinde aufweist.

DE 90 10 459 U1 offenbart ein Ventil, insbesondere zur Umgehung eines Schmierölfilters einer Brennkraftmaschine mit einer Ventilplatte, ähnlich zu dem Ventil aus dem vorstehend genannten Dokument, wobei die Ventilhaube einen umlaufenden Bördelrand aufweist und oberhalb des Bördelrandes Aussparungen vorgesehen sind, die gleichmäßig über den Umfang der Ventilhaube verteilt sind, wobei am oberen Ende der Haube eine zylindrische Führung vorgesehen ist, wobei die Ventilplatte eine einseitig geschlossene Bohrung enthält, die der zylindrischen Führung zugewandt ist und in die die zylindrische Führung hineinreicht.

DE 43 26 968 U1 offenbart einen Feststeller zum Feststellen relativ zueinander beweglicher Objekte, bspw. für Türen, wobei bei dem Feststeller zwei Drosselstellen zwischen zwei Arbeitskammern in Serie geschaltet sind.

Im Lichte dessen ist es eine Aufgabe der vorliegenden Erfindung, ein Überdruckventil für einen Türantrieb bereitzustellen, bei welchem einfach und vor allem zuverlässig der vorgegebene Ansprechdruck erhalten wird.

Diese Aufgabe wird durch ein Überdruckventil für einen Türantrieb mit den Merkmalen des Anspruchs 1 gelöst. Vorteilhafte Weiterbildungen für ein solches Überdruckventil sind den abhängigen Ansprüchen zu entnehmen. Ferner betrifft die vorliegende Erfindung auch einen Türantrieb mit einem solchen Überdruckventil sowie ein Herstellungsverfahren zum Erhalt eines solchen Überdruckventils.

Bei dem erfindungsgemäßen Überdruckventil ist das Lagerungselement über wenigstens eine plastische Verformung des Gehäuses in diesem fixiert. Über die plastische Verformung wird das Lagerungselement derart positioniert und in dem Gehäuse fixiert, dass das Dichtelement durch das Federelement mit einer vorgegebenen Kraft in seine Schließstellung vorgespannt wird.

Erfindungsgemäß wird dementsprechend das Lagerungselement nicht in einer festen, vorbestimmten Relativposition in Bezug auf das Gehäuse an diesem fixiert. Vielmehr wird das Lagerungselement an genau der Relativposition, welche zum Erhalt der für den gewünschten Ansprechdruck notwendigen Vorspannkraft des Dichtungselements führt, fixiert. Dies ermöglicht es, auftretende Toleranzen bei der Herstellung der einzelnen Komponenten des Überdruckventils durch eine Anpassung der Auswahl der konkreten Relativpositionierung des Lagerungselements innerhalb des Gehäuses beim Zusammensetzen des Überdruckventils auszugleichen. Dies geschieht in einer besonders einfachen Art und Weise, nämlich über eine Anpassung der Position der jeweiligen plastischen Verformung des Gehäuses entlang des Aufnahmebereichs des Gehäuses. Unter einer plastischen Verformung wird hierbei eine tatsächliche Verformung bzw. Umformung des Gehäuses verstanden. Eine bloße Ausnehmung oder eine bestimmte von vornherein festgelegte Ausformung des Gehäuses, wie dies beispielsweise bei der oben beschriebenen Ausgestaltung nach dem Stand der Technik der Fall ist, fällt nicht unter den Begriff "Verformung", wie er hier verstanden wird.

Erfindungsgemäß weist das Lagerungselement in einem radialen Außenumfang des Lagerungselements wenigstens eine Ausnehmung auf und die wenigstens eine plastische Verformung des Gehäuses ragt in die wenigstens eine Ausnehmung hinein, um so eine axiale Relativpositionierung des Lagerungselements in Bezug auf das Gehäuse festzulegen. Insbesondere bilden dabei die jeweilige plastische Verformung und die jeweilige Ausnehmung einen Formschluss. Dies ist eine besonders einfache und zuverlässige Möglichkeit zur Fixierung des Lagerungselements in dem Gehäuse.

Bevorzugt weist das Lagerungselement wenigstens zwei separate derartige Ausnehmungen auf, während das Gehäuse wenigstens zwei separate entsprechende plastische Verformungen aufweist. Dabei ragt jede der plastischen Verformungen in eine der separaten Ausnehmungen hinein. Die Bildung mehrerer Paare aus Ausnehmung und entsprechender Verformung führt zu einer zuverlässigeren und festeren Fixierung des Lagerungselements in dem Gehäuse.

Weiter bevorzugt sind dabei die separaten Ausnehmungen in dem Lagerungselement und die entsprechenden separaten plastischen Verformungen des Gehäuses gleichmäßig um den radialen Außenumfang des Lagerungselements verteilt. So wird ein Verkippen des Lagerungselements innerhalb des Gehäuses verhindert, was wiederum Schwankungen des Ansprechdrucks des Überdruckventils entgegenwirkt.

Weiter bevorzugt sind die separaten Ausnehmungen in dem Lagerungselement und die entsprechenden separaten plastischen Verformungen des Gehäuses jeweils paarweise einander gegenüberliegend um den radialen Außenumfang des Lagerungselements verteilt. Mit anderen Worten, einem Paar aus Ausnehmung und jeweiliger plastischer Verformung liegt ein entsprechendes Paar aus Ausnehmung und jeweiliger Verformung gegenüber. Dies erleichtert die Herstellung entsprechender Überdruckventile und vermindert die Gefahr des Erhalts von unerwünschten Verspannungen des Gehäuses während der Bildung der jeweiligen Verformungen.

Bevorzugt weist das Lagerungselement einen Hülsenabschnitt auf, welcher das Federelement quer zur Längsrichtung des Federelements zumindest teilweise umgibt. Dies ermöglicht eine besonders kompakte und dennoch stabile Ausgestaltung des Überdruckventils.

Weiter bevorzugt ist die jeweilige Ausnehmung, bzw. sind die jeweiligen Ausnehmungen, durch einen jeweiligen Durchbruch im Hülsenabschnitt des Lagerungselements gebildet. Solche Durchbrüche sind einfach zu bilden und erlauben es, die jeweiligen Verformungen durch die gesamte Wand des Hülsenabschnitts hindurch zu bilden. Dies ermöglicht eine besonders genaue und zuverlässige Fixierung des Lagerungselements innerhalb des Aufnahmebereichs des Gehäuses.

Bevorzugt ist das Lagerungselement derart ausgebildet, dass es vor einer Bildung der wenigstens einen plastischen Verformung des Gehäuses in der axialen Richtung des Aufnahmebereichs des Gehäuses in diesem stufenlos verschiebbar ist. Mit anderen Worten ist das Lagerungselement derart ausgebildet, dass dessen Relativpositionierung innerhalb des Gehäuses stufenlos, also über einen kontinuierlichen Bereich von Relativpositionen hinweg, gewählt werden kann. Dies ermöglicht eine besonders genaue Anpassung der erhaltenen Vorspannkraft und damit des Ansprechdrucks des Überdruckventils während dessen Bildung.

Bevorzugt ist neben der oder den gebildeten plastischen Verformungen keinerlei weitere Fixierung zwischen dem Lagerungselement und dem Gehäuse vorgesehen ist. Es dienen also lediglich der bzw. die gebildeten plastischen Verformungen zur Fixierung des Lagerungselement innerhalb des Gehäuses. Eine solche Ausgestaltung ist besonders einfach und kostengünstig zu erhalten.

Alternativ dazu ist bevorzugt neben der oder den gebildeten plastischen Verformungen noch wenigstens eine weitere Fixierung zwischen dem Lagerungselement und dem Gehäuse vorgesehen. Das heißt, dass insbesondere nach der Bildung der plastischen Verformungen und damit nach einer Vorfixierung des Lagerungselements innerhalb des Gehäuses noch wenigstens eine weitere Fixierung des Lagerungselements an dem Gehäuse gebildet wird. Dies ermöglich eine besonders zuverlässige Fixierung des Lagerungselements an der jeweiligen Relativposition innerhalb des Gehäuses.

Weiter bevorzugt ist wenigstens eine weitere Fixierung durch eine Verschweißung des Gehäuses mit dem Lagerungselement gebildet. Insbesondere handelt es sich dabei um eine Laserverschweißung des Gehäuses mit dem Lagerungselement. Derartige zusätzliche Fixierungen sind vergleichsweise einfach zu bilden und sorgen für eine besonders zuverlässige Fixierung des Lagerungselement.

Ein weiterer Aspekt der vorliegenden Erfindung betrifft einen Türantrieb, insbesondere einen Türschließer, mit wenigstens einem der zuvor beschriebenen Überdruckventile. Mit einem solchen Türantrieb kann man von den durch das jeweilige Überdruckventil erhaltenen Vorteile profitieren.

Noch ein weiterer Aspekt der vorliegenden Erfindung betrifft ein Verfahren zur Herstellung eines Überdruckventils für einen Türantrieb, insbesondere zur Herstellung eines Überdruckventils für einen Türschließer. Insbesondere betrifft die vorliegende Erfindung ein Verfahren zur Herstellung eines der zuvor beschriebenen Überdruckventile. Herkömmliche Herstellungsverfahren umfassen regelmäßig zumindest die folgenden Schritte: Bereitstellen eines Gehäuse mit einem darin gebildeten Strömungskanal und einem Aufnahmebereich; Einführen eines Dichtelements und eines Federelements in den Aufnahmebereich des Gehäuses derart, dass das Dichtelement zwischen einer Schließstellung, in welcher es den Strömungskanal verschließt, und einer Offenstellung, in welcher es den Strömungskanal freigibt, beweglich in dem Gehäuse vorgesehen ist; Positionierung eines Lagerungselements derart in dem Aufnahmebereich des Gehäuses, dass das Federelement zwischen dem Dichtelement und dem Lagerungselement derart eingespannt ist, dass es das Dichtelement von dessen Offenstellung in dessen Schließstellung vorspannt. Die Fixierung des Lagerungselements innerhalb des Gehäuses erfolgt durch die Bildung wenigstens einer plastischen Verformung des Gehäuses an einer Position, in welcher das Dichtelement durch das Federelement mit einer vorgegebenen Kraft in seine Schließstellung vorgespannt wird.

Wie bereits oben dargelegt, erfolgt erfindungsgemäß die Fixierung des Lagerungselements nicht an einer durch zuvor gebildete Ausnehmungen des Gehäuses festgelegten Relativposition in dem Gehäuse. Vielmehr erfolgt erfindungsgemäß die Fixierung durch die Bildung wenigstens einer entsprechenden Verformung des Gehäuses, und zwar genau an derjenigen Relativposition, in welcher die dem gewünschten Ansprechdruck entsprechende vorgegebene Vorspannkraft für das Dichtelement erhalten wird. Dies ermöglicht den einfachen und zuverlässigen Ausgleich eventueller Toleranzen bei der Herstellung der einzelnen Komponenten des Überdruckventils bei dessen Zusammensetzung.

Bevorzugt wird beim Zusammensetzen des Überdruckventils das Lagerungselement mit einer der vorgegebenen Vorspannkraft entsprechenden Kraft gegen die Kraft des Federelements in den Aufnahmebereich eingeschoben und das Lagerungselement an der so erhaltenen Relativposition gegenüber dem Gehäuse durch die Bildung der wenigstens einen plastischen Verformung fixiert. Dieses Verfahren ist besonders einfach umzusetzen und ermöglicht eine zuverlässige Fixierung des Lagerungselements an der entsprechenden Relativposition.

Vor der Positionierung des Lagerungselements in dem Aufnahmebereich wird erfindungsgemäß in einem radialen Außenumfang des Lagerungselements wenigstens eine Ausnehmung gebildet. Die wenigstens eine plastische Verformung des Gehäuses wird dann derart gebildet, dass diese in die wenigstens eine Ausnehmung hineinragt, um so eine axiale Relativpositionierung des Lagerungselements in Bezug auf das Gehäuse festzulegen. Insbesondere bilden dabei die plastische Verformung und die jeweilige Ausnehmung einen Formschluss. Ein solches Vorgehen ist besonders einfach und dementsprechend auch kostengünstig.

Weiter bevorzugt werden wenigstens zwei separate derartige Ausnehmungen in dem radialen Außenumfang des Lagerungselements gebildet und in dem Gehäuse wenigstens zwei separate plastische Verformungen derart gebildet, dass jede der plastischen Verformungen in eine der separaten Ausnehmungen hineinragt. Die Bildung mehrerer Paare von Ausnehmung und plastischer Verformung ermöglicht eine besonders zuverlässige und positionsgenaue Fixierung des Lagerungselements in dem Gehäuse.

Weiter bevorzugt werden die separaten Ausnehmungen in dem Lagerungselement und die plastischen Verformungen des Gehäuses gleichmäßig um den radialen Außenumfang des Lagerungselements verteilt gebildet. Dies ermöglicht eine besonders stabile und zuverlässige Gesamtausgestaltung für das Überdruckventil.

Weiter bevorzugt werden die separaten Ausnehmungen in dem Lagerungselement und die Verformungen des Gehäuses jeweils paarweise einander gegenüberliegend um den radialen Außenumfang des Lagerungselements verteilt gebildet.

Bevorzugt wird die wenigstens eine plastische Verformung des Gehäuses mittels eines konischen Stempels gebildet. Eine derartige Bildung der wenigstens einen plastischen Verformung ist besonders einfach und ermöglicht eine besonders zuverlässige Fixierung des Lagerungselements.

Bevorzugt wird neben der oder den gebildeten plastischen Verformungen keinerlei weitere Fixierung zwischen dem Lagerungselement und dem Gehäuse gebildet.

Dies vereinfacht den Herstellungsprozess und spart Kosten ein.

Alternativ dazu wird bevorzugt neben der oder den gebildeten plastischen Verformungen noch wenigstens eine weitere Fixierung zwischen dem Lagerungselement und dem Gehäuse gebildet. So wird eine besonders zuverlässige und langlebige Fixierung des Lagerungselements erhalten.

Weiter bevorzugt wird dabei wenigstens eine weitere Fixierung durch eine Verschweißung, insbesondere durch eine Laserverschweißung, des Gehäuses mit dem Lagerungselement gebildet. Eine solche weitere Fixierung ist relativ einfach zu bilden und dennoch zuverlässig und langlebig.

Nachfolgend wird die Erfindung beispielhaft unter Bezugnahme auf die beiliegenden Zeichnungen beschrieben. Es zeigt,
- FIG. 1: eine Explosionsdarstellung eines beispielhaften erfindungsgemäßen Überdruckventils;
- FIG. 2A: eine Schnittansicht des Überdruckventils aus FIG. 1 während des Zusammensetzens des Überdruckventils; und
- FIG. 2B: eine Schnittansicht des Überdruckventils aus FIG. 1 während der Bildung der Verformungen zur Fixierung des Lagerungselements in dem Gehäuse.

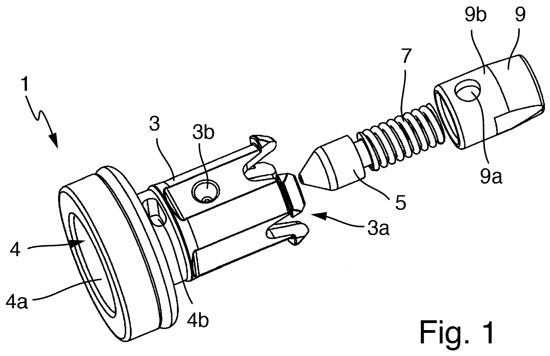

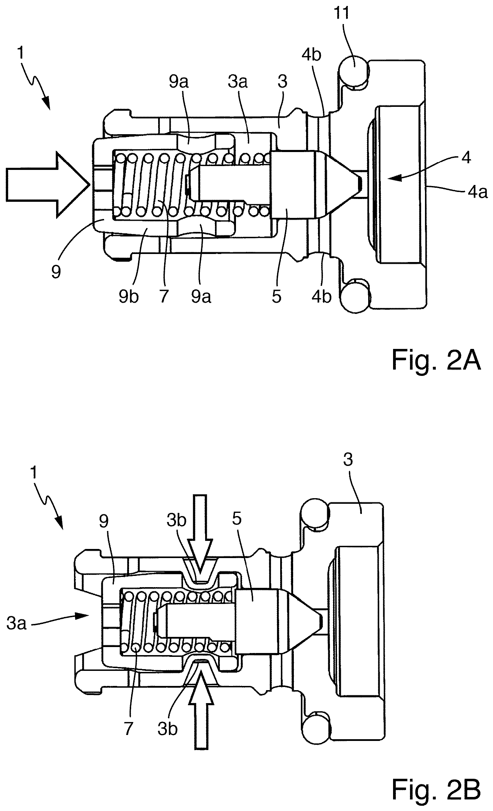

Nun wird unter Bezugnahme auf die Figuren 1, 2A und 2B ein Ausführungsbeispiel für ein erfindungsgemäßes Überdruckventil 1 beschrieben.

Das gezeigte Überdruckventil 1 besteht im Wesentlichen aus einem Gehäuse 3, einem Dichtelement 5, einem Federelement 7 und einem Lagerungselement 9.

Wie insbesondere in den Figuren 2A und 2B zu sehen ist, ist in dem Gehäuse 3 ein Strömungskanal 4 gebildet. Dieser verläuft von einem Einlass 4a zu wenigstens einem Auslass 4b. Das Dichtelement 5 ist in einen Aufnahmebereich 3a des Gehäuses 3 derart eingesetzt, dass es in einer Schließstellung den Strömungskanal 4 verschließt (siehe FIG. 2A und FIG. 2B).

In der gezeigten Ausführungsform sind zwei einander gegenüberliegende Auslässe 4b für den Strömungskanal 4 gebildet. Die konkrete Ausgestaltung des Strömungskanals 4 und des Dichtelements 5 sind jedoch nicht auf diese Variante eingeschränkt. Beispielsweise kann auch nur ein Auslass 4b gebildet werden, welcher dann insbesondere am Ende des Aufnahmebereichs vorgesehen ist, wie dies bei der in FIG. 3 gezeigten Ausgestaltung der Fall ist.

Wichtig ist lediglich, dass das Lagerungselement 9 axial in den Aufnahmebereich 3a des Gehäuses 3 eingesetzt und in dem Gehäuse 3 fixiert ist bzw. wird und das Federelement 7 zwischen dem Lagerungselement 9 und dem Dichtelement 5 innerhalb des Gehäuses 3 derart eingespannt ist bzw. wird, dass das Federelement 7 das Dichtelement 5 in dessen Schließstellung vorspannt. Dabei muss das Dichtelement 5 entgegen der Vorspannkraft des Federelements 7 von der Schließstellung in eine Offenstellung, in welcher das Dichtungselement 5 den Strömungskanal 4 freigibt, beweglich sein.

Diese Bewegung in die Offenstellung hat durch ein Druckmedium hervorgerufen zu werden, welches durch den Einlass 4a in den Strömungskanal 4 eindringt und bei ausreichendem Druck des Mediums, dem sogenannten Ansprechdruck, die Vorspannkraft des Federelements 7 übersteigt. Somit ermöglicht das Überdruckventil 1 ein Abfließen des Druckmediums durch den wenigstens einen Auslass 4b, sobald der Druck des Druckmediums am Einlass 4a den Ansprechdruck übersteigt. Die Höhe des Ansprechdrucks hängt dabei im Wesentlichen von der Kraft ab, mit welcher das Federelement 7 das Dichtelement 5 in seine Schließstellung vorspannt.

Damit der gewünschte Ansprechdruck trotz bestimmten Toleranzen bei der Herstellung der einzelnen Komponenten 3, 5, 7 und 9 des Überdruckventils 1 zuverlässig erhalten wird, erfolgt eine Fixierung des Lagerungselements 9 innerhalb des Gehäuses 3 über wenigstens eine plastische Verformung 3b des Gehäuses 3. Diese wird erst während des Zusammensetzens des Überdruckventils 1 gebildet. Wie insbesondere in FIG. 2B gezeigt ist, sind bzw. werden im vorliegenden Ausführungsbeispiel zwei einander gegenüberliegende plastische Verformungen 3b gebildet, welche jeweils in eine entsprechende in dem Lagerungselement 9 gebildete Ausnehmung 9a hineinreichen. Die gebildeten Verformungen 3b bilden mit den entsprechenden Ausnehmungen 9a jeweils einen Formschluss, welcher jegliche Bewegung des Lagerungselements 9 relativ zum Gehäuse 3 blockiert. Um dabei auch den gewünschten Ansprechdruck für das Überdruckventil 1 zu erhalten, wird das Lagerungselement 9 mit einer Kraft, welche der für den jeweiligen Ansprechdruck notwendigen Vorspannkraft entspricht, entgegen der Kraft des Federelements 5 in den Aufnahmebereich eingeschoben. Dies ist in FIG. 2A dargestellt. Sobald das Lagerungselement 9 seine der jeweiligen Einschubkraft zugehörige Relativposition in dem Gehäuse 3 erreicht hat, werden die entsprechenden plastischen Verformungen 3b des Gehäuses 3 gebildet.

In der Praxis ist dies beispielsweise dadurch möglich, dass das Gehäuse 3 ortsfest eingespannt wird und das Lagerungselement 9 mithilfe einer Einschubvorrichtung (nicht gezeigt) mit der vorgegebenen Kraft in den Aufnahmebereich 3a eingedrückt wird. Die Einschubvorrichtung umfasst dabei der Anzahl der zu bildenden Verformungen entsprechend viele Umformwerkzeuge, welche auf Höhe des Ausnehmungen 9a des Lagerungselements 9 positioniert sind und mit einem Einschieben des Lagerungselements 9 zusammen mit den jeweiligen Ausnehmungen 9a außen entlang des Gehäuses 3 wandern. Bei Erreichen der Einschubposition, welche der jeweiligen Einschubkraft entspricht, werden die Umformwerkzeuge zur Bildung der jeweiligen plastischen Verformungen 3b des Gehäuses 3 aktiviert. Die erhalten plastischen Verformungen 3b werden dadurch stets in die entsprechenden Ausnehmungen 9a hineinragen. Bevorzugt werden dabei die plastischen Verformungen 3b durch konische Stempel gebildet.

Durch dieses Vorgehen ist es möglich, das Lagerungselement 9 auf einfache und zuverlässige Weise an der jeweils der vorgegebenen Vorspannkraft zugehörigen Relativposition gegenüber dem Gehäuse 3 an diesem zu fixieren.

Zur Erhöhung der Stabilität des gebildeten Überdruckventils 1 sind bzw. werden die einzelnen Ausnehmungen 9a in dem Lagerungselement 9 und die entsprechenden Verformungen 3b des Gehäuses 3 gleichmäßig um den radialen Außenumfang des Lagerungselements 9 verteilt und insbesondere paarweise einander gegenüberliegend angeordnet.

Zur besseren Halterung des Federelements 7 weist vorliegend das Lagerungselement 9 einen Hülsenabschnitt 9b auf, welcher das Federelement 7 quer zu dessen Längsrichtung zumindest teilweise umgibt. Dabei sind bzw. werden die beschriebenen Ausnehmungen 9a jeweils in Gestalt von Durchbrüchen in dem besagten Hülsenabschnitt 9b gebildet.

Jedoch sind auch andere Ausgestaltungen zur Fixierung des Lagerungselements 9 an dem Gehäuse 3 möglich. Insbesondere ist es auch denkbar, das Lagerungselement 9 als in sich geschlossenes Kolbenelement auszubilden und/oder die Ausnehmungen 9a jeweils lediglich als Vertiefungen am Außenumfang des Lagerungselement 9 zu bilden.

Als besonders vorteilhaft ist in diesem Zusammenhang eine Ausgestaltung erkannt worden, bei welcher das Lagerungselement 9 vor einer Bildung der wenigstens einen plastischen Verformung 3b des Gehäuses 3 in der axialen Richtung des Aufnahmebereichs 3a des Gehäuses 3 in diesem stufenlos verschiebbar ist. Mit anderen Worten, bevorzugterweise kann die Relativposition des Lagerungselement 9 in Bezug auf das Gehäuse 3 über einen kontinuierlichen Bereich von Relativpositionen hinweg frei gewählt werden.

Zur Fixierung des Lagerungselements 9 an dem Gehäuse 2 können lediglich die gebildeten plastischen Verformungen 3b dienen und keinerlei weitere Fixierungen gebildet sein bzw. werden, wie dies bei dem hier gezeigten Ausführungsbeispiel der Fall ist.

Bei Bedarf, was insbesondere bei einem geplanten Einsatz mit relativ großen Drücken der Fall ist, kann zusätzlich zu den gebildeten plastischen Verformungen 3b noch wenigstens eine weitere Fixierung zwischen dem Lagerungselement 9 und dem Gehäuse 3 vorgesehen sind bzw. werden. Ein Beispiel für eine solche weitere Fixierung ist eine Verschweißung, insbesondere eine Laserverschweißung, des Gehäuses 3 mit dem Lagerungselement 9.

Das hier gezeigte Überdruckventil 1 ist ferner mit einem Dichtungsring 11 versehen, welcher nach dem Einsetzen des Überdruckventils 1 in einen entsprechenden Türantrieb einen dichten Abschluss des Überdruckventils 1 zu den anderen Komponenten des Türantriebs ermöglicht.

Die vorliegende Erfindung betrifft nicht nur ein solches Überdruckventil 1, sondern auch ein entsprechendes Herstellungsverfahren sowie einen Türantrieb und insbesondere einen Türschließer mit einem solchen Überdruckventil 1.

### Bezugszeichenliste

- 1: Überdruckventil
- 3: Gehäuse
- 3a: Aufnahmebereich
- 3b: Verformung
- 3c: Ausnehmung
- 4: Strömungskanal
- 4a: Einlass
- 4b: Auslass
- 5: Dichtelement
- 7: Federelement
- 9: Lagerungselement
- 9a: Ausnehmung
- 9b: Hülsenabschnitt
- 9c: Klipkontur bzw. -ausformung
- 11: Dichtungsring

## Patentansprüche

1. Überdruckventil (1) für einen Türantrieb, insbesondere für einen Türschließer, wobei das Überdruckventil (1) umfasst:
ein Gehäuse (3) mit einem darin gebildeten Strömungskanal (4);
ein Dichtelement (5), welches zwischen einer Schließstellung, in welcher es den Strömungskanal (4) verschließt, und einer Offenstellung, in welcher es den Strömungskanal (4) freigibt, beweglich in dem Gehäuse (3) vorgesehen ist;
ein Federelement (7); und
ein Lagerungselement (9), welches in einer axialen Richtung in einen Aufnahmebereich (3a) des Gehäuses (3) eingesetzt und in dem Gehäuse (3) fixiert ist;
wobei das Federelement (7) zwischen dem Lagerungselement (9) und dem Dichtelement (5) innerhalb des Gehäuses (3) derart eingespannt ist, dass es das Dichtelement (5) von dessen Offenstellung in dessen Schließstellung vorspannt,
wobei das Lagerungselement (9) über wenigstens eine plastische Verformung (3b) des Gehäuses (3) in diesem fixiert ist, und
über die wenigstens eine plastische Verformung (3b) das Lagerungselement (9) an derjenigen Relativposition in dem Gehäuse (3) fixiert ist, in welcher das Dichtelement (5) durch das Federelement (7) mit einer vorgegebenen Kraft in seine Schließstellung vorgespannt wird,
**dadurch gekennzeichnet, dass**
das Lagerungselement (9) in einem radialen Außenumfang des Lagerungselements (9) wenigstens eine Ausnehmung (9a) aufweist, und
die wenigstens eine plastische Verformung (3b) des Gehäuses (3) in die wenigstens eine Ausnehmung (9a) hineinragt, um so eine axiale Relativpositionierung des Lagerungselements (9) in Bezug auf das Gehäuse (3) festzulegen.

2. Überdruckventil (1) nach Anspruch 1,
wobei das Lagerungselement (9) wenigstens zwei separate derartige Ausnehmungen (9a) aufweist und das Gehäuse (3) wenigstens zwei separate entsprechende plastische Verformungen (3b) aufweist,
wobei jede der plastischen Verformungen (3b) in eine der separaten Ausnehmungen (9a) hineinragt, insbesondere wobei die separaten Ausnehmungen (9a) und die entsprechenden separaten plastischen Verformungen (3b) gleichmäßig um den radialen Außenumfang des Lagerungselements (9) verteilt sind, insbesondere wobei die separaten Ausnehmungen (9a) und die entsprechenden separaten plastischen Verformungen (3b) jeweils paarweise einander gegenüberliegend um den radialen Außenumfang des Lagerungselements (9) verteilt sind.

3. Überdruckventil (1) nach einem der vorhergehenden Ansprüche, wobei das Lagerungselement (9) einen Hülsenabschnitt (9b) aufweist, welcher das Federelement (7) quer zur Längsrichtung des Federelements (7) zumindest teilweise umgibt, insbesondere wobei die jeweilige Ausnehmung (9a) durch einen jeweiligen Durchbruch im Hülsenabschnitt (9b) des Lagerungselements (9) gebildet ist.

4. Überdruckventil (1) nach einem der vorhergehenden Ansprüche, wobei das Lagerungselement (9) derart ausgebildet ist, dass es vor einer Bildung der wenigstens einen plastischen Verformung (3b) des Gehäuses (3) in der axialen Richtung des Aufnahmebereichs (3a) des Gehäuses (3) in diesem stufenlos verschiebbar ist.

5. Überdruckventil (1) nach einem der vorhergehenden Ansprüche,
wobei neben der oder den gebildeten plastischen Verformungen (3b) keinerlei weitere Fixierung zwischen dem Lagerungselement (9) und dem Gehäuse (3) vorgesehen ist.

6. Überdruckventil (1) nach einem der Ansprüche 1 bis 4,
wobei neben der oder den gebildeten plastischen Verformungen (3b) noch wenigstens eine weitere Fixierung zwischen dem Lagerungselement (9) und dem Gehäuse (3) vorgesehen ist, insbesondere wobei wenigstens eine weitere Fixierung durch eine Verschweißung, insbesondere durch Laserschweißen, des Gehäuses (3) mit dem Lagerungselement (9) gebildet ist.

7. Türantrieb, insbesondere Türschließer, mit einem Überdruckventil (1) nach einem der vorhergehenden Ansprüche.

8. Verfahren zur Herstellung eines Überdruckventils (1) für einen Türantrieb, insbesondere für einen Türschließer, insbesondere zur Herstellung eines Überdruckventils (1) nach einem der Ansprüche 1 bis 7, wobei das Verfahren zumindest die folgenden Schritte umfasst:
Bereitstellen eines Gehäuses (3) mit einem darin gebildeten Strömungskanal (4) und einem Aufnahmebereich (3a);
Einführen eines Dichtelements (5) und eines Federelements (7) in den Aufnahmebereich (3a) des Gehäuses (3) derart, dass das Dichtelement (5) zwischen einer Schließstellung, in welcher es den Strömungskanal (4) verschließt, und einer Offenstellung, in welcher es den Strömungskanal (4) freigibt, beweglich in dem Gehäuse (3) vorgesehen ist;
axiales Einsetzen eines Lagerungselements (9) in den Aufnahmebereich (3a) und Positionieren des Lagerungselements (9) derart in dem Aufnahmebereich (3a) des Gehäuses (3), dass das Federelement (7) zwischen dem Dichtelement (5) und dem Lagerungselement (9) derart eingespannt ist, dass das Federelement (7) das Dichtelement (5) von dessen Offenstellung in dessen Schließstellung vorspannt,
wobei die Fixierung des Lagerungselements (9) innerhalb des Gehäuses (3) durch die Bildung wenigstens einer plastischen Verformung (3b) des Gehäuses (3) an einer Position, in welcher das Dichtelement (5) durch das Federelement (7) mit einer vorgegebenen Kraft in seine Schließstellung vorgespannt wird, erfolgt, **dadurch gekennzeichnet, dass**
vor der Positionierung des Lagerungselements (9) in dem Aufnahmebereich (3a) in einem radialen Außenumfang des Lagerungselements (9) wenigstens eine Ausnehmung (9a) gebildet wird, und
wobei die wenigstens eine plastische Verformung (3b) des Gehäuses (3) derart gebildet wird, dass diese in die wenigstens eine Ausnehmung (9a) hineinragt, um so eine axiale Relativpositionierung des Lagerungselements (9) in Bezug auf das Gehäuse (3) festzulegen.

9. Verfahren nach Anspruch 8,
wobei beim Zusammensetzen des Überdruckventils (1) das Lagerungselement (9) mit einer der vorgegebenen Vorspannkraft entsprechenden Kraft gegen die Kraft des Federelements (7) in den Aufnahmebereich (3a) eingeschoben wird und das Lagerungselement (9) an der so erhaltenen Relativposition gegenüber dem Gehäuse (3) durch die Bildung der wenigstens einen plastischen Verformung (3a) fixiert wird.

10. Verfahren nach einem der Ansprüche 8 und 9,
wobei wenigstens zwei separate derartige Ausnehmungen (9a) in dem radialen Außenumfang des Lagerungselements (9) gebildet werden und in dem Gehäuse (3) wenigstens zwei separate plastische Verformungen (3b) derart gebildet werden, dass jede der plastischen Verformungen (3b) in eine der separaten Ausnehmungen (9a) hineinragt, insbesondere wobei die separaten Ausnehmungen (9a) in dem Lagerungselement (9) und die entsprechenden separaten Verformungen (3b) des Gehäuses (3) gleichmäßig um den radialen Außenumfang des Lagerungselements (9) verteilt gebildet werden, insbesondere wobei die separaten Ausnehmungen (9a) in dem Lagerungselement (9) und die entsprechenden separaten Verformungen (3b) des Gehäuses (3) jeweils paarweise einander gegenüberliegend um den radialen Außenumfang des Lagerungselements (9) verteilt gebildet werden.

11. Verfahren nach einem der Ansprüche 8 bis 10,
wobei die wenigstens eine plastische Verformung (3b) des Gehäuses (3) mittels eines konischen Stempels gebildet wird.

12. Verfahren nach einem der Ansprüche 8 bis 11,
wobei neben der oder den gebildeten plastischen Verformungen (3b) keinerlei weitere Fixierung zwischen dem Lagerungselement (9) und dem Gehäuse (3) gebildet wird.

13. Verfahren nach einem der Ansprüche 8 bis 11,
wobei neben der oder den gebildeten plastischen Verformungen (3b) noch wenigstens eine weitere Fixierung zwischen dem Lagerungselement (9) und dem Gehäuse (3) gebildet wird.

14. Verfahren nach Anspruch 13,
wobei wenigstens eine weitere Fixierung durch eine Verschweißung, insbesondere durch Laserschweißen, des Gehäuses (3) mit dem Lagerungselement (9) gebildet wird.

## Claims

1. Overpressure valve (1) for a door drive, in particular for a door closer, wherein the overpressure valve (1) comprises:
a housing (3) with a flow channel (4) formed therein;
a sealing element (5) which is provided in a manner movable between a closed position, in which it closes off the flow channel (4), and an open position, in which it opens up the flow channel (4), in the housing (3);
a spring element (7); and
a mounting element (9) which is inserted in an axial direction into a receiving region (3a) of the housing (3) and is fixed in the housing (3);
wherein the spring element (7) is clamped within the housing (3) between the mounting element (9) and the sealing element (5) in such a way as to preload the sealing element (5) from its open position into its closed position,
wherein the mounting element (9) is fixed in the housing (3) via at least one plastic deformation (3b) thereof, and,
via the at least one plastic deformation (3b), the mounting element (9) is fixed at that relative position in the housing (3) in which the spring element (7) preloads the sealing element (5) into its closed position by way of a predefined force,
**characterized in that**
the mounting element (9) has at least one cutout (9a) in a radial outer circumference of the mounting element (9), and
the at least one plastic deformation (3b) of the housing (3) projects into the at least one cutout (9a) so as to thus define an axial relative positioning of the mounting element (9) with respect to the housing (3).

2. Overpressure valve (1) according to Claim 1,
wherein the mounting element (9) has at least two separate cutouts (9a) of said type and the housing (3) has at least two separate corresponding plastic deformations (3b),
wherein each of the plastic deformations (3b) projects into one of the separate cutouts (9a), in particular wherein the separate cutouts (9a) and the corresponding separate plastic deformations (3b) are distributed uniformly around the radial outer circumference of the mounting element (9), in particular wherein the separate cutouts (9a) and the corresponding separate plastic deformations (3b) are in each case distributed around the radial outer circumference of the mounting element (9) so as to be opposite one another in pairs.

3. Overpressure valve (1) according to either of the preceding claims,
wherein the mounting element (9) has a sleeve portion (9b) which at least partially surrounds the spring element (7) transversely to the longitudinal direction of the spring element (7), in particular wherein the respective cutout (9a) is formed by a respective aperture in the sleeve portion (9b) of the mounting element (9).

4. Overpressure valve (1) according to one of the preceding claims,
wherein the mounting element (9) is formed in such a way as to be displaceable in a continuously variable manner in the receiving region (3a) of the housing (3) in the axial direction thereof prior to formation of the at least one plastic deformation (3b) of the housing (3).

5. Overpressure valve (1) according to one of the preceding claims,
wherein, apart from the plastic deformation(s) (3b) formed, no further means of fixing is provided between the mounting element (9) and the housing (3).

6. Overpressure valve (1) according to one of Claims 1 to 4,
wherein, in addition to the plastic deformation(s) (3b) formed, at least one further means of fixing is provided between the mounting element (9) and the housing (3), in particular wherein at least one further means of fixing is formed by a welding, in particular by laser welding, of the housing (3) to the mounting element (9).

7. Door drive, in particular door closer, having an overpressure valve (1) according to one of the preceding claims.

8. Method for producing an overpressure valve (1) for a door drive, in particular for a door closer, in particular for producing an overpressure valve (1) according to one of Claims 1 to 7, wherein the method comprises at least the following steps:
providing a housing (3) having a flow channel (4) formed therein and having a receiving region (3a);
introducing a sealing element (5) and a spring element (7) into the receiving region (3a) of the housing (3) in such a way that the sealing element (5) is provided in a manner movable between a closed position, in which it closes off the flow channel (4), and an open position, in which it opens up the flow channel (4), in the housing (3) ;
axially inserting a mounting element (9) into the receiving region (3a), and positioning the mounting element (9) in the receiving region (3a) of the housing (3) in such a way that the spring element (7) is clamped between the sealing element (5) and the mounting element (9) in such a way that the spring element (7) preloads the sealing element (5) from its open position into its closed position;
wherein the fixing of the mounting element (9) is secured within the housing (3) by the formation of at least one plastic deformation (3b) of the housing (3) at a position in which the spring element (7) preloads the sealing element (5) into its closed position by way of a predefined force, **characterized in that**,
prior to the positioning of the mounting element (9) in the receiving region (3a), at least one cutout (9a) is formed in a radial outer circumference of the mounting element (9), and
wherein the at least one plastic deformation (3b) of the housing (3) is formed in such a way as to project into the at least one cutout (9a) so as to thus define an axial relative positioning of the mounting element (9) with respect to the housing (3).

9. Method according to Claim 8,
wherein, when assembling the overpressure valve (1), the mounting element (9) is pushed into the receiving region (3a) counter to the force of the spring element (7) by a force corresponding to the predefined preload force and the mounting element (9) is fixed by the formation of the at least one plastic deformation (3a) at the thus obtained relative position with respect to the housing (3).

10. Method according to either of Claims 8 and 9,
wherein at least two separate cutouts (9a) of said type are formed in the radial outer circumference of the mounting element (9) and at least two separate plastic deformations (3b) are formed in the housing (3) in such a way that each of the plastic deformations (3b) projects into one of the separate cutouts (9a), in particular wherein the separate cutouts (9a) in the mounting element (9) and the corresponding separate deformations (3b) of the housing (3) are formed distributed uniformly around the radial outer circumference of the mounting element (9), in particular wherein the separate cutouts (9a) in the mounting element (9) and the corresponding separate deformations (3b) of the housing (3) are in each case formed distributed around the radial outer circumference of the mounting element (9) so as to be opposite one another in pairs.

11. Method according to one of Claims 8 to 10,
wherein the at least one plastic deformation (3b) of the housing (3) is formed by means of a conical punch.

12. Method according to one of Claims 8 to 11,
wherein, apart from the plastic deformation(s) (3b) formed, no further means of fixing is formed between the mounting element (9) and the housing (3).

13. Method according to one of Claims 8 to 11,
wherein, in addition to the plastic deformation(s) (3b) formed, at least one further means of fixing is formed between the mounting element (9) and the housing (3).

14. Method according to Claim 13,
wherein at least one further means of fixing is formed by a welding, in particular by laser welding, of the housing (3) to the mounting element (9).

## Revendications

1. Soupape de surpression (1) pour un entraînement de porte, en particulier pour un dispositif de fermeture de porte, la soupape de surpression (1) comprenant :
un boîtier (3) dans lequel est formé un canal d'écoulement (4) ;
un élément d'étanchéité (5), qui est monté mobile dans le boîtier (3) entre une position fermée, dans laquelle il ferme le canal d'écoulement (4), et une position ouverte, dans laquelle il ouvre le canal d'écoulement (4) ;
un élément ressort (7) ; et
un élément palier (9), qui est inséré dans le sens axial dans une zone de réception (3a) du boîtier (3) et est fixé dans le boîtier (3) ;
l'élément ressort (7) étant serré entre l'élément palier (9) et l'élément d'étanchéité (5) à l'intérieur du boîtier (3) de telle sorte qu'il précontraint l'élément d'étanchéité (5) de sa position ouverte à sa position fermée,
l'élément palier (9) étant fixé, par au moins une déformation plastique (3b) du boîtier (3), dans ce dernier, et
l'élément palier (9) étant fixé, par l'intermédiaire de la déformation plastique (3b), dans le boîtier (3) dans la position relative dans laquelle l'élément d'étanchéité (5) est précontraint dans sa position de fermeture par l'élément ressort (7) avec une force prédéfinie,
**caractérisé en ce que**
l'élément palier (9) présente au moins un évidement (9a) dans une circonférence extérieure radiale de l'élément palier (9), et
ladite au moins une déformation plastique (3b) du boîtier (3) s'engage dans ledit au moins un évidement (9a) de manière à définir un positionnement relatif axial de l'élément palier (9) par rapport au boîtier (3).

2. Soupape de surpression (1) selon la revendication 1,
dans laquelle l'élément palier (9) présente au moins deux évidements séparés de ce type (9a) et le boîtier (3) présente au moins deux déformations plastiques séparées correspondantes (3b),
chacune des déformations plastiques (3b) s'engageant dans l'un des évidements séparés (9a), les évidements séparés (9a) et les déformations plastiques séparées correspondantes (3b) étant en particulier répartis uniformément sur la circonférence extérieure radiale de l'élément palier (9), en particulier, les évidements séparés (9a) et les déformations plastiques séparées correspondantes (3b) étant répartis par paires l'un en face de l'autre autour de la circonférence extérieure radiale de l'élément palier (9).

3. Soupape de surpression (1) selon l'une quelconque des revendications précédentes,
dans laquelle l'élément palier (9) présente une partie manchon (9b) qui entoure au moins partiellement l'élément ressort (7) transversalement à la direction longitudinale de l'élément ressort (7), en particulier dans laquelle l'évidement (9a) respectif est formé par une ouverture respective dans la partie manchon (9b) de l'élément palier (9).

4. Soupape de surpression (1) selon l'une quelconque des revendications précédentes,
dans laquelle l'élément palier (9) est conçu de telle sorte qu'avant la formation de la déformation plastique (3b) du boîtier (3), il peut être déplacé en continu dans la direction axiale de la zone de réception (3a) du boîtier (3) dans cette zone de réception.

5. Soupape de surpression (1) selon l'une quelconque des revendications précédentes,
dans laquelle, en plus de la ou des déformation(s) plastique(s) (3b) formée(s), aucune autre fixation n'est prévue entre l'élément palier (9) et le boîtier (3).

6. Soupape de surpression (1) selon l'une quelconque des revendications 1 à 4,
dans laquelle, en plus de la ou des déformation(s) plastique(s) (3b) formée(s), au moins une autre fixation est également prévue entre l'élément palier (9) et le boîtier (3), en particulier au moins une autre fixation est formée par soudage, en particulier par soudage au laser, du boîtier (3) à l'élément palier (9).

7. Entraînement de porte, en particulier dispositif de fermeture de porte, comprenant une soupape de surpression (1) selon l'une quelconque des revendications précédentes.

8. Procédé de fabrication d'une soupape de surpression (1) pour un entraînement de porte, en particulier pour un dispositif de fermeture de porte, en particulier pour la fabrication d'une soupape de surpression (1) selon l'une quelconque des revendications 1 à 7, **caractérisé en ce que** le procédé comprend au moins les étapes suivantes :
fourniture un boîtier (3) comprenant un canal d'écoulement (4) formé dans celui-ci et une zone de réception (3a) ;
introduction d'un élément d'étanchéité (5) et d'un élément ressort (7) dans la zone de réception (3a) du boîtier (3) de telle sorte que l'élément d'étanchéité (5) soit prévu mobile dans le boîtier (3) entre une position de fermeture, dans laquelle il ferme le canal d'écoulement (4), et une position d'ouverture, dans laquelle il ouvre le canal d'écoulement (4) ;
insertion axiale d'un élément palier (9) dans la zone de réception (3a) et positionnement de l'élément palier (9) dans la zone de réception (3a) du boîtier (3) de telle sorte que l'élément ressort (7) soit serré entre l'élément d'étanchéité (5) et l'élément palier (9), de sorte que l'élément ressort (7) précontraint l'élément d'étanchéité (5) de sa position d'ouverture à sa position de fermeture ;
la fixation de l'élément palier (9) à l'intérieur du boîtier (3) s'effectuant par la formation d'au moins une déformation plastique (3b) du boîtier (3) à une position à laquelle l'élément d'étanchéité (5) est précontraint dans sa position de fermeture par l'élément ressort (7) avec une force prédéfinie, **caractérisé en ce que**,
avant le positionnement de l'élément palier (9) dans la zone de réception (3a), au moins un évidement (9a) est formé dans une circonférence extérieure radiale de l'élément palier (9), et
ladite au moins une déformation plastique (3b) du boîtier (3) est formée de telle sorte qu'elle s'engage dans ledit au moins un évidement (9a) afin de définir un positionnement relatif axial de l'élément palier (9) par rapport au boîtier (3).

9. Procédé selon la revendication 8,
dans lequel, lors du montage de la soupape de surpression (1), l'élément palier (9) est inséré dans la zone de réception (3a) avec une force correspondant à la force de précontrainte prédéfinie à l'encontre de la force de l'élément ressort (7) et l'élément palier (9) est fixé à la position relative par rapport au boîtier (3) ainsi obtenue par la formation de ladite au moins une déformation plastique (3a).

10. Procédé selon l'une quelconque des revendications 8 et 9,
dans lequel au moins deux évidements séparés (9a) de ce type sont formés dans la circonférence extérieure radiale de l'élément palier (9) et au moins deux déformations plastiques séparées (3b) sont formées dans le boîtier (3) de telle sorte que chacune des déformations plastiques (3b) s'engage dans l'un des évidements séparés (9a), les évidements séparés (9a) dans l'élément palier (9) et les déformations séparées correspondantes (3b) du boîtier (3) étant en particulier formés de manière répartie uniformément sur la circonférence extérieure radiale de l'élément palier (9), les évidements séparés (9a) dans l'élément palier (9) et les déformations séparées correspondantes (3b) du boîtier (3) étant en particulier respectivement formés de manière répartie par paires l'un en face de l'autre autour de la circonférence extérieure radiale de l'élément palier (9).

11. Procédé selon l'une quelconque des revendications 8 à 10,
dans lequel la déformation plastique (3b) du boîtier (3) est formée au moyen d'un piston conique.

12. Procédé selon l'une quelconque des revendications 8 à 11,
dans lequel, en plus de la ou des déformation(s) plastique(s) (3b) formée(s), aucune autre fixation n'est formée entre l'élément palier (9) et le boîtier (3).

13. Procédé selon l'une quelconque des revendications 8 à 11,
dans lequel, en plus de la ou des déformation(s) plastique(s) (3b) formée(s), au moins une autre fixation est formée entre l'élément palier (9) et le boîtier (3).

14. Procédé selon la revendication 13,
dans lequel au moins une autre fixation est formée par soudage, en particulier par soudage au laser, du boîtier (3) à l'élément palier (9).
